(19) Europäisches Patentamt

European Patent Office

Office européen des brevets

(11) **EP 1 647 926 A1**

(12) **EUROPEAN PATENT APPLICATION**

(43) Date of publication:
**19.04.2006 Bulletin 2006/16**

(51) Int Cl.:
***G06Q 10/00*** (2006.01)

(21) Application number: **04105096.4**

(22) Date of filing: **15.10.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **SAP AG**
**69190 Walldorf (DE)**

(72) Inventors:
  • **Goll, Michael Hans**
    **69121 Heidelberg (DE)**
  • **Müller, Kai Daniel**
    **69115 Heidelberg (DE)**

• **Taylor, Scott E.**
  **Il 61548 (US)**
• **Kamp, Carole Ann**
  **Il 61568 (US)**
• **Forret, Stephen J.**
  **Il 61550 (US)**
• **Vasi, Gary L.**
  **Mi 48083 (US)**

(74) Representative: **Schramm, Michael et al**
  **Bettinger Schneider Schramm,**
  **Patent- und Rechtsanwälte,**
  **Postfach 86 02 67**
  **81629 München (DE)**

(54) **Methods and systems for managing inventory by optimizing order quantity and safety stock**

(57)    Methods and systems consistent with the present invention facilitate inventory management by determining an order quantity and a safety stock based on the order quantity that provide a minimum total cost, while satisfying a service level over an entire demand period for a good or service. In one embodiment, a method includes determining a first order quantity, determining a search direction, and determining a second order quantity and a safety stock based on the first order quantity and the search direction, such that the second order quantity and the safety stock provide a minimum total cost.

**FIG. 1**

EP 1 647 926 A1

**Description**

BACKGROUND OF THE INVENTION

I. Field of the Invention

The present invention relates generally to methods and systems for managing inventory. More particularly, the present invention relates to methods and systems for managing inventory by determining order quantity and safety stock.

II. Background Information

In today's world of business, with global competition running rampant and consumer expectations ever-increasing, the efficiency of a business enterprise is becoming more important than ever. No longer will a consumer accept any delay in satisfying their mounting appetite for goods and services. They want their materials, goods, and services immediately, and in addition, demand the highest quality at the lowest cost. Hence, many businesses use supply chain management to control and optimize their production and cost.

Supply chain management is a set of approaches and processes for efficiently integrating suppliers, manufacturers, warehouses, and stores, so that merchandise is produced and distributed at the right quantities, to the right locations, and at the right time, in order to minimize system-wide cost while satisfying service level requirements. A supply chain is a network of facilities and distribution options that procures and acquires material, processes the material, transforms the material into intermediate and finished products, and distributes the finished products to customers, whether intermediate or final ones. Supply chains exist both in manufacturing as well as in service organizations.

If a customer wishes to purchase a certain quantity of goods or services from a facility within a supply chain, availability of the goods or services at the facility is desirable because a shortage will cause a disruption in the supply chain. As used herein, goods may comprise, for example, any quantity or number of parts, products, materials, merchandise, supplies or any other item or service. The customer may be an end customer, a middleman, or another facility acting like a customer in a supply chain (e.g. a manufacturer, distributor, warehouse, and the like). Moreover, any inventory shortage in the supply chain could have an immense impact on the efficiency of the business, including production delays, missed order deadlines, an inability to meet consumer demand, complete stoppages of the business's production, and lost business and revenue. Thus, an inventory shortage can have extremely negative consequences on the business's reputation, market share, profitability, and ultimately, survivability.

To satisfy customer demand, the facility may either make the goods or obtain them from a supplier. The supplier may be an external vendor, a manufacturer, a supplier, a warehouse, or any other facility or entity. As used herein, an "order quantity" is a value representing a quantity of goods ordered from an entity or facility, such as suppliers, manufacturers, and the like. Once the goods corresponding to an order quantity are received by a facility, it becomes part of the facility's stock of goods available at the facility. When ordering goods from a supplier, a certain period of time, called the lead time, elapses between the time an order is placed by a customer with the supplier and the time the goods are available for the customer. The lead time includes, for example, the process of ordering the goods, the time that the supplier needs to make the goods available, the time for transporting the goods to the facility, and the time needed to process the receipt of the goods at the facility.

If demand for goods is predictable (e.g. a continuous demand for the good), a particular quantity of goods will suffice for a certain time, and that time depends on the rate of demand. To keep up with the demand, a new order has to be placed with the supplier before the facility's stock is exhausted because the newly ordered goods will not be available for delivery to a customer until after the lead time. For example, if the lead time is one week, a new order must be placed with the supplier at least one week before the facility's inventory will be exhausted. As such, the newly ordered goods will be available for delivery to customers on or before the day that the existing stock is exhausted. Thus, the facility will always satisfy the customer demand when the demand is continuous. Customer demand, however, is almost never predictable, such as with a continuous demand pattern. Therefore, more advanced inventory planning is necessary.

Because demand for a good is generally not known in advance, it must be determined from a forecast of demand for the good. Actual demand for a good, however, may vary from the forecasted demand. If actual demand for a good is higher than the forecasted demand for the good, a customer demand for the good might not be satisfied. Moreover, the actual lead time may vary from a predicted (or anticipated) lead time. Even with a continuous demand, if the actual lead time is longer than the anticipated lead time, situations may arise where customer demand might not be satisfied. To hedge against this possibility, the facility may hold a safety stock. A safety stock is a value representing the amount of goods on hand to prevent running out of goods in stock. As used herein, the term "inventory" refers to the goods available at a facility, which can include both order quantity and safety stock.

To a certain extent, holding a safety stock can mitigate demand or lead time uncertainties. For example, if the actual customer demand for a good is higher than the forecasted demand, the safety stock provides additional goods that can be used to satisfy customer demand for the good during the lead time. Also, if the actual lead time is longer than the anticipated lead time, the safety stock can be used to satisfy customer demand before the newly ordered goods are actually received and available for customers.

Conventionally, the level of safety stock was independent of order quantity. Instead, the safety stock depended mainly on the service level to be secured during the lead time. This service level measures how many sales orders can be fully satisfied compared to all orders, or how many of the ordered goods can in fact be delivered. The higher the service level, the higher the quantity of goods held as safety stock to safeguard against uncertainties and demand variations that could lead to a shortage of goods. A shortage of goods could result in unsatisfied customer orders, non-delivery, or late delivery.

Traditionally, the service level used to determine safety stock was only applicable to the goods available during the lead time, not the entire demand period. A demand period is the time that elapses between orders for goods (i.e. the amount of time after an order for goods is placed and before the next order for those goods is placed). For example, if the facility places one order every four weeks, the demand period is four weeks. The lead time, as explained above, is the time that elapses between the time an order is placed and the time the goods become part of the facility's inventory, for example, one week. In any given demand period, a 100% service level could be maintained until the lead time, because if an increased demand occurred before the lead time, the remaining inventory could be used to satisfy this demand and new goods could be ordered to supplement the inventory before the end of the demand period (as long as the increased demand did not exhaust all inventory). For example, following the example provided above, if an increased demand arose before the lead time, e.g. two weeks before the end of the demand period, new goods could be ordered and received within one week, which is before the end of the demand period. In this case, safety stock is not necessary because a new order can be placed and received in time. Safety stock was therefore only a concern when the demand increased during the lead time period. Accordingly, the amount of safety stock necessary to account for any demand variations during the lead time was traditionally determined based on the service level to be achieved during the lead time. For example, a 95% service level during the lead time may correspond to a specific quantity of goods held as safety stock. One of ordinary skill in the art would recognize that software packages used to determine safety stock based only on lead time (independently of order quantity) are known, such as SAP Advanced Planning & Optimization ("SAP APO"), available from SAP AG (Walldorf, Germany).

In some situations, however, there can be a relationship between safety stock and order quantity. For example, when the quantity ordered from the supplier is increased and the rate of demand remains the same, the delivered stock will satisfy demand for a longer period of time. A greater order quantity, therefore, may reduce the probability that demand for a good cannot be met promptly when it occurs. In other words, the greater the quantity ordered from the supplier, the lower the quantity required for safety stock. In some cases, to achieve a given service level (e.g. 95%) across an entire demand period, including the lead time, it may be possible to reduce or even eliminate the safety stock by increasing the order quantity. Moreover, total cost associated with inventory (both cycle stock and safety stock) depends on the quantity ordered from the supplier and any goods held as safety stock. Accordingly, it would be beneficial to calculate safety stock and order quantity in combination to determine an order quantity and safety stock with a reduced total cost that fulfills a desired service level across the entire demand period.

SUMMARY OF THE INVENTION

Methods, systems, and articles of manufacture consistent with the present invention facilitate inventory management. More particularly, methods, systems, and articles of manufacture for managing inventory are provided that determine an order quantity and a safety stock.

One exemplary aspect of the present invention relates to a method for managing inventory, which includes determining a first order quantity, determining a search direction, and determining a second order quantity and a safety stock based on the first order quantity and the search direction, such that the second order quantity and the safety stock reduce total cost.

Another exemplary aspect of the present invention relates to a system for managing inventory, which includes a processor and a memory, wherein the processor and the memory are configured to perform a method for managing inventory. The method includes determining a first order quantity, determining a search direction, and determining a second order quantity and a safety stock based on the first order quantity and the search direction, such that the second order quantity and the safety stock reduce total cost.

Another exemplary aspect of the present invention relates to a computer-readable medium containing instructions to configure a data processor to perform a method for managing inventory. The method includes determining a first order quantity, determining a search direction, and determining a second order quantity and a safety stock based on the first order quantity and the search direction, such that the second order quantity and the safety stock reduce total cost.

Additional aspects of the invention are set forth in the detailed description which follows or may be learned by practice of methods, systems, and articles of manufacture consistent with the present invention. The foregoing background and summary are not intended to be comprehensive, but instead serve to help artisans of ordinary skill understand the following implementations consistent with the invention set forth in the appended claims. In addition, the foregoing background and summary are not intended to provide any limitations on the claimed invention.

BRIEF DESCRIPTION OF THE DRAWINGS

The accompanying drawings, which are incorporated in and constitute a part of this disclosure, illustrate various embodiments and aspects of the present invention and, together with the description, explain the principles of the invention. In the drawings:

FIG. 1 illustrates an exemplary system environment, in accordance with methods and systems consistent with the present invention;

FIG. 2 is an exemplary flowchart depicting steps for optimizing order quantity and safety stock, in accordance with methods and systems consistent with the present invention;

FIG. 3 is an exemplary flowchart depicting steps for determining a first order quantity, in accordance with methods and systems consistent with the present invention;

FIG. 4 is an exemplary plot of order cost and inventory carrying cost, in accordance with methods and systems consistent with the present invention;

FIG. 5 is an exemplary flowchart depicting steps for determining a search direction, in accordance with methods and systems consistent with the present invention;

FIG. 6 is an exemplary flowchart depicting steps for determining an optimum order quantity and safety stock, in accordance with methods and systems consistent with the present invention;

FIG. 7 is an exemplary plot of total cost as a function of order quantity, in accordance with methods and systems consistent with the present invention;

FIG. 8 is another exemplary flowchart depicting steps for determining an optimum order quantity and safety stock, in accordance with methods and systems consistent with the present invention; and

FIG. 9 is another exemplary plot of total cost as a function of order quantity, in accordance with methods and systems consistent with the present invention.

DETAILED DESCRIPTION

Reference will now be made in detail to exemplary embodiments of the invention, examples of which are illustrated in the accompanying drawings. Wherever possible, the same reference numbers will be used throughout the drawings to refer to the same or like parts. The implementations set forth in the following description do not represent all implementations consistent with the claimed invention. Instead, they are merely some examples of systems and methods consistent with the invention.

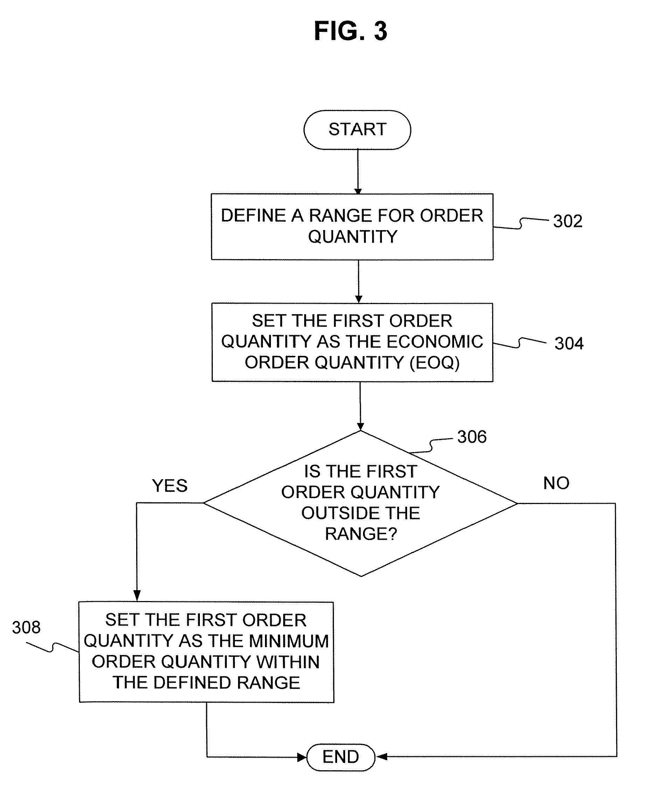

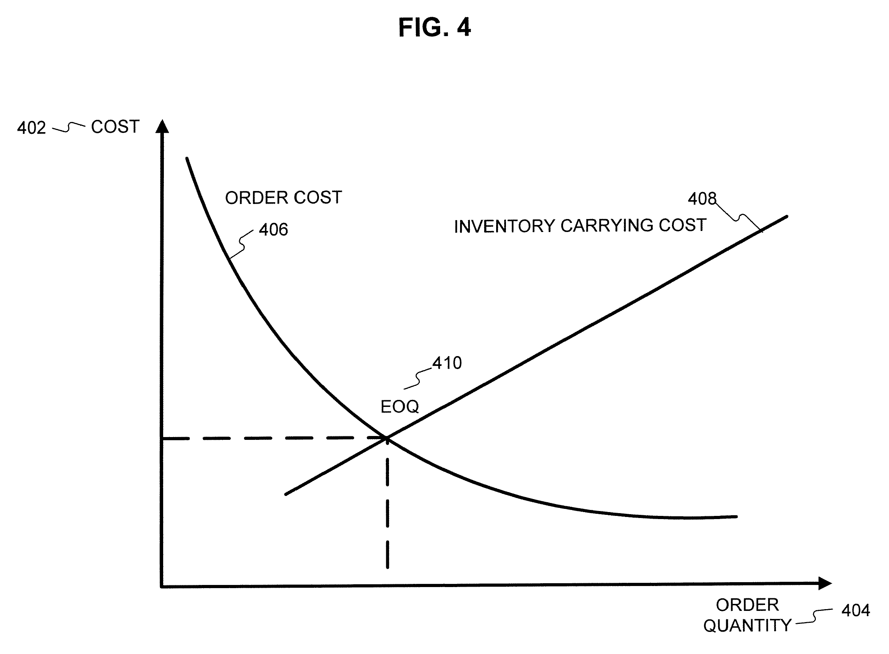

Systems and methods consistent with one embodiment of the present invention determine values of order quantity and safety stock, such that the determined values reduce (e.g., minimize) the total cost associated with ordering the goods and holding the goods in inventory. Moreover, in some embodiments of the present invention, the values of order quantity and safety stock may be determined using a three-step iterative process. First, a proposed quantity of goods to be ordered (also referred to herein as a "first order quantity") from an entity, such as a supplier, is determined. Although the proposed quantity can be any value, the first order quantity may be equal to an Economic Order Quantity (EOQ), described in greater detail below with respect to FIGs. 3 and 4. Next, a direction of search is determined, which defines whether the order quantity should be increased or decreased to determine a reduced (e.g. minimum) total cost. Next, the order quantity and the safety stock values are varied according to the determined search direction until a reduced total cost is determined. The determined total cost and its corresponding values of order quantity and safety stock represent optimum amounts of goods to hold in inventory over an entire demand period, while still satisfying a desired level of service.

To determine order quantity and safety stock values that reduce the total cost, such as total inventory cost, a processor may determine such quantities based on a fixed order cost for each purchase order and a carrying cost for holding each good in the facility's inventory. The fixed order cost is a fixed amount per transaction (or order) and does not generally vary with the order quantity. For example, the fixed order cost may depend upon the supplier, transportation mode, and the like. Thus, when fewer orders (having larger quantities) are placed in a year, the fixed order cost for that year may be reduced. Further, as the safety stock is reduced by increasing the order quantity, the carrying cost for holding the safety stock decreases. An increased order quantity also increases the cost of holding regular goods (or stock). Accordingly, the total annual cost may be determined based on the order quantity and the safety stock. Moreover, optimum values of order quantity and safety stock may be determined such that the total cost is reduced.

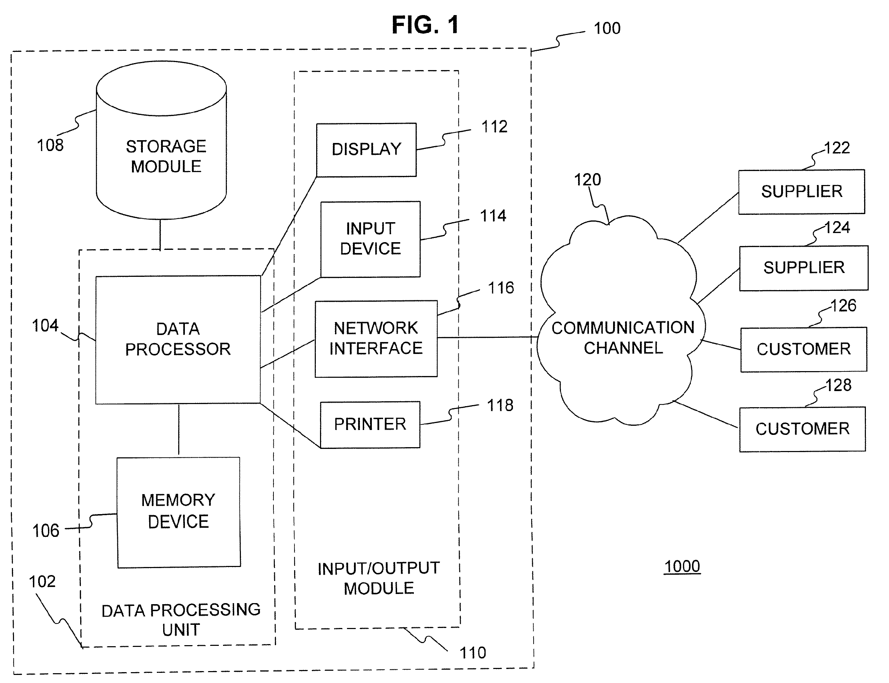

FIG. 1 illustrates an exemplary system environment, in accordance with methods and systems consistent with the present invention. Referring to FIG. 1, the system environment 1000 includes a data processing system 100, a communication channel 120, one or more suppliers 122, 124, and one or more customers 126, 128. Data processing system 100 further includes a data processing unit 102, a storage module 108, and an input/output (I/O) module 110. Data processing system 100 may be implemented, for example, by a PC, UNIX server, or mainframe computer for performing various functions and operations. Moreover, data processing system 100 may be implemented, for example, by a general purpose computer or data processor selectively activated or reconfigured by a stored computer program, or may be a specially constructed computing platform for carrying-out the features and operations disclosed herein.

Data processing unit 102, as illustrated in FIG. 1, includes a data processor 104 and a memory device 106. Data processor 104 may be any device, such as a central processing unit (CPU) integrated circuit, capable of carrying out the processes of data processing system 100. Data processor 104 is configured with program code stored in memory device 106. The stored code may include one or more of the steps described herein. Although data processing unit 102 is illustrated in FIG. 1 as including data processor 104 and memory device 106, one of ordinary skill in the art may recognize that data processing unit 102 may also include other processing devices and systems. Moreover, although FIG. 1 illustrates only a single data processing unit 102, data processing system 100 may alternatively include a set of processing units.

Storage module 108 may be embodied with a variety of components or subsystems capable of providing storage including, for example, a hard drive, an optical drive, a general-purpose storage device, a removable storage device, and/or memory. Further, although storage module 108 is illustrated in FIG. 1 as being separate or independent from data processing unit 102, storage module 108 and data processing unit 102 may be implemented as part of a single platform or system.

The I/O module 110 may include one or more input and/or output devices, such as a display 112, an input device 114, a network interface 116, and a printer 118. Network interface 116 enables data processing system 100 to communicate through a network. For example, network interface 116 may be embodied as an Ethernet network interface card or a wireless LAN interface card, such as cards compatible with the IEEE 802.11 series of standards. Input device 114 may be implemented with a variety of devices to receive a user's input and/or provide the input to data processing unit 102. Some of these input devices may include, for example, a keyboard and a mouse. Moreover, although I/O module 110 is depicted in FIG. 1 as being co-located with data processing unit 102 within data processing system 100, I/O module 110 (or devices therein) may be in a distant location connected to the data processing unit 102 through a network, such as a local area network or the Internet.

Data processing system 100 may communicate with one or more suppliers 122 and 124 and one or more customers 126 and 128 through communication channel 120 via network interface 116. Communication channel 120 may be embodied as any type of communication medium or channel and may include, alone or in any suitable combination, a telephony-based network, a local area network (LAN), a wide area network (WAN), a dedicated intranet, the Internet, a wireless network, or a bus. Moreover, in one embodiment, communication channel 120 may include or be a part of a communications network, such as the Internet or a corporate intranet that is compatible with a networking protocol such as TCP/IP (Transport Control Protocol/Internet Protocol).

Suppliers 122 and 124 may provide goods to a facility wherein the exemplary system environment illustrated in FIG. 1 is being implemented. Suppliers 122 and 124 may be external vendors, manufacturers, distributors, warehouses, or any other entity or facility capable of supplying goods.

Customers 126 and 128 may request and/or receive goods from a facility implementing the system illustrated in FIG. 1. Customers 126 and 128 may be end customers, middlemen, or other facilities acting like a customer in a supply chain (e.g. a manufacturer, distributor, warehouse, and the like).

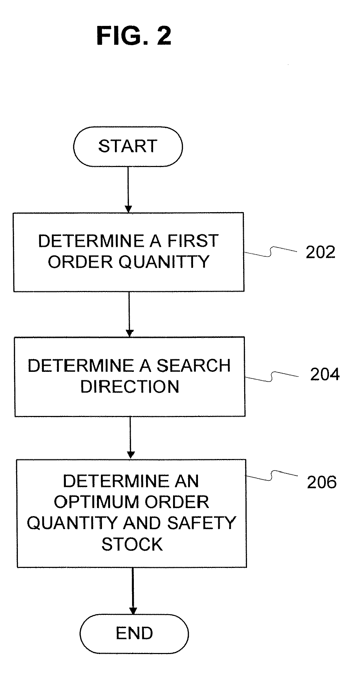

FIG. 2 is an exemplary flowchart depicting steps for determining an order quantity and a safety stock that reduce cost. Referring to FIG. 2, data processor 104 may determine a first order quantity (step 202), with the first order quantity representative of a proposed order of goods. Data processor 104 then determines a search direction (step 204). The determined search direction represents whether, in the subsequent step 206, the proposed order quantity should be increased or decreased to reduce total cost. Finally, data processor 104 determines an order quantity and a safety stock (step 206). The order quantity and safety stock may be determined by determining a total cost for the first order quantity and repeating the total cost determination for each possible order quantity in the determined search direction until a reduced cost (e.g. a minimum cost) is identified. Steps 202-206 are described in further detail below.

Returning to step 202, the first order quantity may be determined as illustrated in FIG. 3. Referring to FIG. 3, data processor 104 defines a range of possible order quantities (step 302). This range may be predetermined based on the identity of a facility and may be set to any value. For example, an automobile manufacturing facility may define a range of mufflers as 10-100 mufflers. Different facilities will be subject to different limitations (e.g. price, storage space, etc.), which may be considered in defining the range. For example, the manufacturing facility mentioned above may not be able to store more than 100 mufflers. Therefore, the maximum number of mufflers the facility can order at any given time is 100. One of ordinary skill in the art would understand that there are other ways to define an order quantity range, and that any number of characteristics or limitations may affect a facility's order quantity range.

Once a range is determined, data processor 104 sets the first order quantity as the Economic Order Quantity (EOQ) (step 304). The EOQ is determined based on a fixed order cost (also referred to as "order cost") associated with making each transaction, such as a purchase order, and/or a cost to hold each inventory unit ("inventory carrying cost"). The order cost is an administrative cost for making the transaction, such as transportation costs, contracting, procurement costs, and other costs that remain relatively fixed for each transaction. For example, the cost of shipping goods by air is part of the order cost of those goods. The total order cost ($C_{ORD}$) for a twelve month period is a function of order quantity, and can determined according to the following equation:

$$C_{ORD} = \Omega \frac{m}{Q} \qquad \text{Equation 1}$$

where $\Omega$ represents the cost to place one order; $m$ represents the forecasted demand for the next 12 months; and $Q$ represents the order quantity. The inventory carrying cost is the cost associated with holding each item of inventory. The total inventory carrying cost ($C_{INV}$) for a twelve month period is also a function of order quantity, and can be determined according to the following equation:

$$C_{INV} = \left( S_s + \frac{Q}{2} \right) c_{INV} \qquad \text{Equation 2}$$

where $S_s$ represents the quantity of goods held as safety stock; $Q$ represents the order quantity; and $c_{INV}$ represents the annual inventory carrying cost per unit. The annual inventory carrying cost per unit ($c_{INV}$) may take into consideration factors such as location planning cost, volume cost, price-quantity-scales, interest rate, depreciation, and other factors associated with the good or its procurement. Moreover, such factors may be different for each facility.

The Economic Order Quantity (EOQ) may be the order quantity for which the inventory carrying cost and the order cost are equal. FIG. 4 shows exemplary plots of order cost 406 and an inventory carrying cost 408, with an EOQ 410. Referring to FIG. 4, each of plots 406 and 408 is plotted as a function of cost 402 and order quantity 404. FIG. 4 illustrates EOQ 410 as the order quantity for which order cost 406 equals inventory carrying cost 408. Returning to step 304 of FIG. 3, the EOQ ($Q_{EOQ}$) can also be determined according to the following equation:

$$Q_{EOQ} = \sqrt{\frac{2 * \Omega * m}{c_{INV}}} \qquad \text{Equation 3}$$

where $\Omega$ represents the cost to place one order; $m$ represents the forecasted demand for the next 12 months; and $c_{INV}$ represents the annual inventory carrying cost per unit. Although in the embodiment illustrated in FIG. 3, the first order quantity is set as the EOQ, the first order quantity may be set as any quantity within the range defined in step 302.

Once the first order quantity has been set (step 304), data processor 104 determines whether the order quantity is outside the predetermined range defined in step 302 (step 306). Returning to the previous example, if the order quantity range is defined in step 302 as 10-100 mufflers, any order quantity less than about ten mufflers or greater than about one hundred mufflers will fall outside the defined range. In this example, if the first order quantity is set at ten mufflers, it would not fall outside the defined range. If, however, the first order quantity is set at two mufflers, it would fall outside the defined range. If the first order quantity is outside the predetermined range defined in step 302, then data processor 104 sets the first order quantity as the minimum order quantity within the range defined in step 302 (step 308). Continuing with the above example, if the first order quantity is two mufflers, which falls outside the defined range, in step 308, data processor 104 sets the first order quantity to ten mufflers, which is the minimum order quantity within the defined range of 10-100 mufflers. If the first order quantity does not fall outside the defined range (step 306), then the process ends.

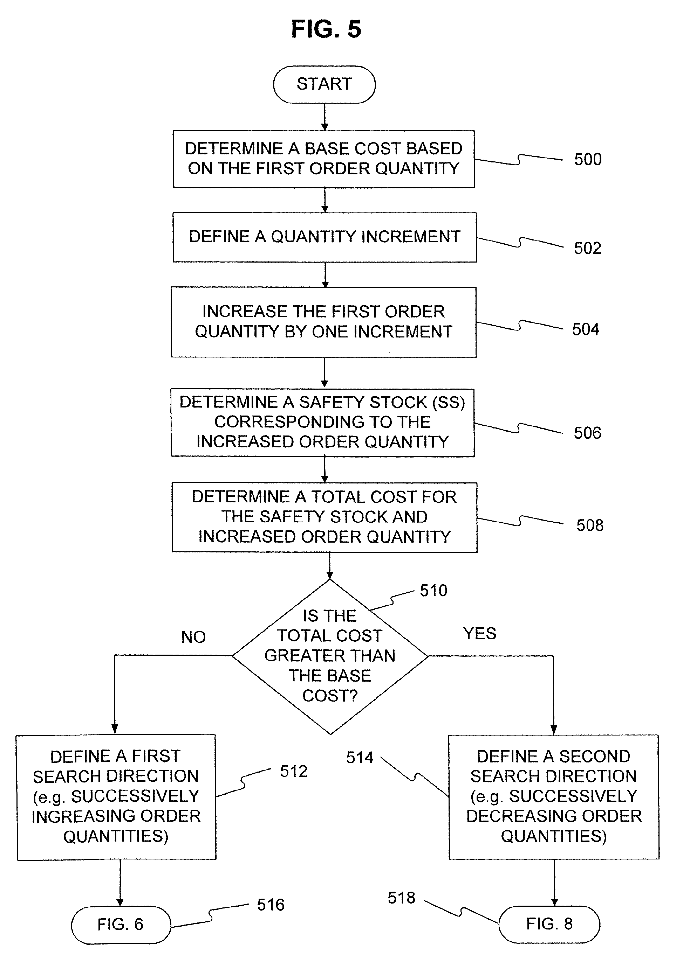

Returning to FIG. 2, once the first order quantity is determined, data processor 104 determines a search direction (step 204). Data processor 104 determines the search direction based on whether the total cost increases or decreases when the order quantity is increased. In one embodiment, data processor 104 determines the search direction as illustrated in FIG. 5. Referring to FIG. 5, data processor 104 may determine a base cost based on the first order quantity (step 500). The base cost is the total cost for the first order quantity including order cost and inventory carrying cost. The total cost ($C_{TOT}$) for any order quantity is the sum of the inventory carrying cost ($C_{INV}$) and the ordering cost ($C_{ORD}$) for that order quantity. The total cost ($C_{TOT}$) serves as a cost function, and is defined as follows:

$$C_{TOT} = C_{INV} + C_{ORD} \qquad \text{Equation 4}$$

Further, as explained above with respect to FIG. 4, EOQ 410 is a value for which inventory carrying cost ($C_{INV}$) 408 equals order cost ($C_{ORD}$) 406. Therefore, in one embodiment where the first order quantity is set as the EOQ, based on the equations provided above, the base cost ($C_{BASE}$) for the first order quantity can be calculated as follows:

$$C_{BASE} = 2\Omega \frac{m}{Q_{EOQ}} \qquad \text{Equation 5}$$

where $\Omega$ represents the cost to place one order; $m$ represents the forecasted demand for the next 12 months; and $Q_{EOQ}$ represents the EOQ.

Once the base cost has been determined, data processor 104 defines a quantity increment (step 502). Specifically, the quantity increment is an amount that the order quantity will be changed during each iteration of step 206. This increment can be defined as any number of quantity units, depending on the preferences, specifications, constraints, or limitations of the facility implementing the process. Returning to the muffler example, the quantity increment may be one muffler.

Next, data processor 104 increases the first order quantity by one increment (step 504). Returning again to the muffler example, if the first order quantity is set at ten mufflers and the quantity increment is defined as one muffler, data processor 104 increases (step 504) the order quantity to eleven mufflers.

Once the order quantity has been increased, data processor 104 determines a safety stock ($S_s$) that corresponds to the increased order quantity ($Q$) (step 506). The safety stock ($S_s$) is determined based on a service factor ($k$) derived from service efficiency, a compound lead-time ($\lambda_c$), and a standard deviation of the forecast demand ($\sigma$). An exemplary equation for safety stock ($S_s$) is as follows:

$$S_s = k * \sqrt{\lambda_c} * \sigma \qquad \text{Equation 6}$$

where the service factor ($k$) is derived from the effective service shortage ($K$).

One of ordinary skill in the art may recognize that software tools are commercially available to determine a service factor ($k$) from an effective service shortage ($K$) and to determine safety stock ($S_S$). For example, safety stock planning tools for calculating Equations 1-6 are available in the SAP APO, where service factor $k$ can be determined based on a service level over lead time. Moreover, a percentile function based on a statistical function can be used to determine service factor k from an effective service level over lead time. Percentile functions are commercially available in software, such as MathCAD or Microsoft Excel. Furthermore, the effective service level over lead time can be determined based on effective service shortage K (described below with respect to Equations 8 or 9). Specifically, the effective service level over lead time can be determined as follows:

$$Service\ level\ over\ lead\ time\ = 1 - K. \qquad \text{Equation 7}$$

Although the Equation 6 does not include order quantity, safety stock may be determined based on order quantity because the effective service shortage ($K$) is determined based on the order quantity. Specifically, when the target service level (or efficiency) (*P*) is defined as a target service level across an entire demand period (and not just for the lead time), the effective service shortage (*K*) becomes a function of order quantity (Q). Thus, a target service efficiency (*P*) representative of the entire demand period may be used to determine the effective service shortage (*K*) as follows:

$$K = (1-P)\frac{Q}{\sqrt{\lambda_c * \sigma}} \qquad \text{Equation 8}$$

where *P* represents the target service efficiency; *Q* represents the order quantity; $\lambda_c$ represents the compound lead-time; and σ represents the standard deviation of the forecast demand in pieces per period. This equation is based on the assumption of a normal distribution. The effective service shortage (*K*) may also be determined based on a Poisson distribution according to the following equation:

$$K = (PV * Q * \cos t)/N \qquad \text{Equation 9}$$

where *PV* represents a policy variable; *Q* represents the order quantity; *cost* represents the planning cost; and *N* represents the forecasted number of entries per period. By way of example, *PV* may represent a policy variable that is may be defined in a separate process (e.g., an earlier optimization process) or one determined by an external host system. Equations 8-9 can thus be used to determine an effective service shortage K.

In Equations 6 and 8, the compound lead-time ($\lambda_c$) includes various elements. Generally, the elements that factor into compound lead-time can be grouped into the following categories: (1) time required for a facility to determine an order plan, which includes, for example, the number of goods to order and what supplier to order the goods from; (2) time required for a facility to review and authorize an order plan; (3) time required for the facility to send the order plan to the supplier; (4) time required to place the order at the supplier; (5) a supplier's internal lead-time, which includes reaction time, procurement time, manufacturing time, and shipping time; (6) time required for the transportation of goods from the supplier to either a packager or the facility; (7) time required for the packager to process the goods; (8) transportation lead-time between facilities and packagers (e.g., time required to ship by air, rail, or ground); and (9) time required for receiving and processing the goods at the facility. Compound lead-time may be determined as the sum of one or more of these categories.

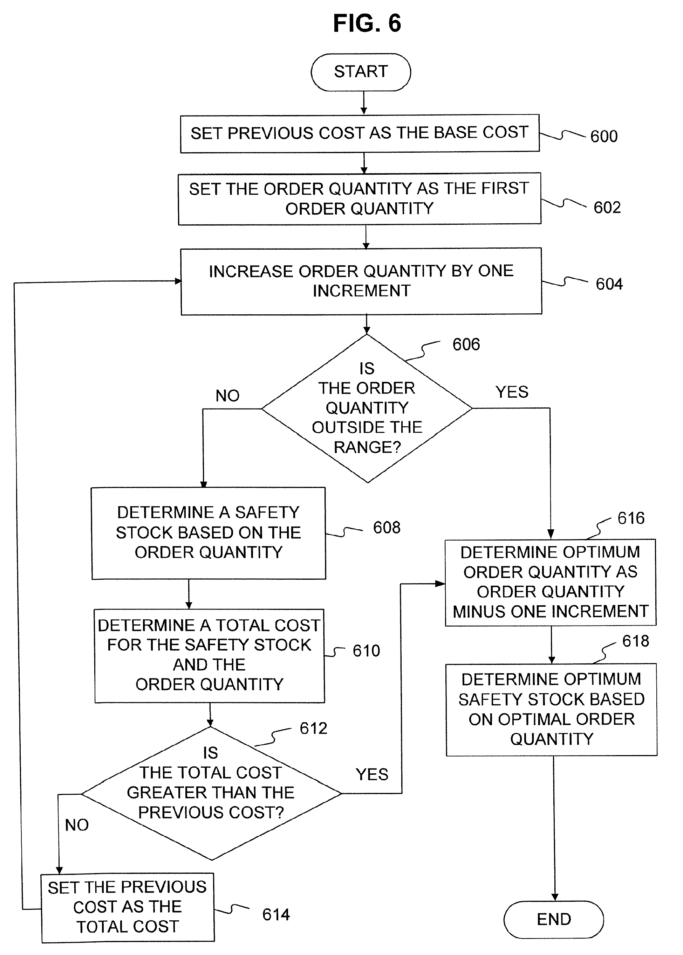

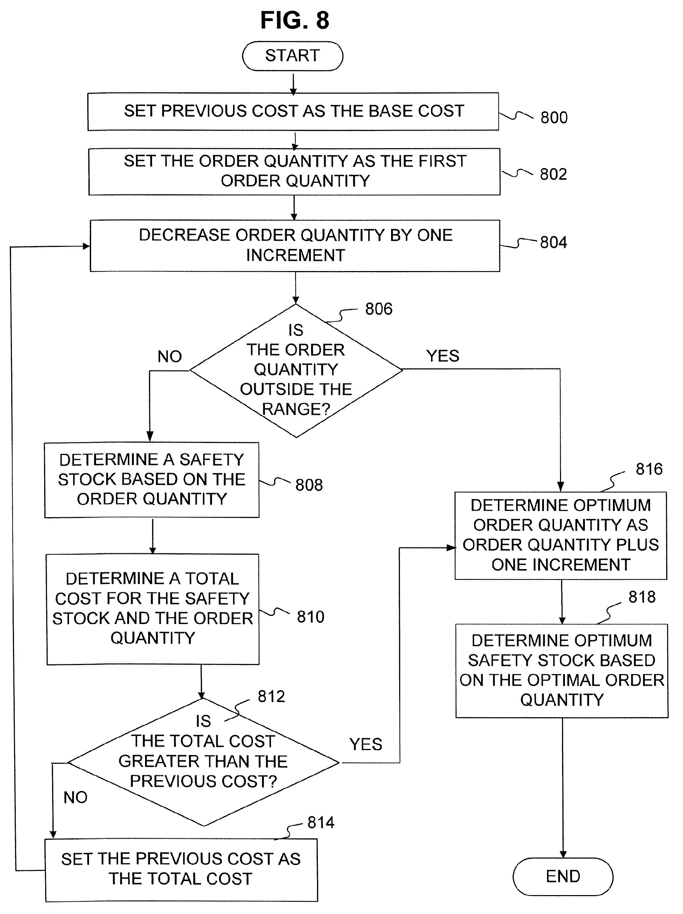

Returning to FIG. 5, once the safety stock is determined, data processor 104 determines a total cost for the safety stock and the increased order quantity (step 508). Total cost ($C_{TOT}$) is determined by adding the total annual inventory carrying cost ($C_{INV}$) to the total annual ordering cost ($C_{ORD}$), as noted above with respect to Equation 4. After determining the total cost, data processor 104 compares the total cost to the base cost (step 510). If the total cost is less than the base cost, data processor 104 defines a first search direction as, for example, an increasing order quantity, and then continues to FIG. 6 (steps 510, 512, and 516). If the total cost is greater than the base cost, then data processor 104 defines a second search direction as, for example, a decreasing order quantity, and then continues to FIG. 8 (steps 510, 514, and 518).

Returning to FIG. 2, once the search direction is determined, data processor 104 may then determine an optimum order quantity and safety stock by determining a total cost for the first order quantity and iterating the total cost determination for each possible order quantity in the determined search direction until a reduced (or minimum) total cost is found (step 206). In one embodiment, when the total cost is less than the base cost (steps 510, 512, and 516), the optimum order quantity and safety stock are determined as illustrated in FIG. 6.

FIG. 6 is an exemplary flowchart depicting steps for determining an optimum order quantity and safety stock, in accordance with methods and systems consistent with the present invention. Referring to FIG. 6, data processor 104 uses the previously determined base cost of step 500 as the base cost (step 600). The previous cost is used as a variable to iteratively search the cost function (Equation 4) so that the total cost of each incremented order quantity can be compared to the total cost of the previous order quantity (i.e. previous cost). Searching the cost function involves varying variables of the cost function until you reach some type of minimum or maximum. One of ordinary skill in the art will recognize various numerical optimization techniques that can be used to search a cost function, such as conjugate gradient, golden section method, and the parabolic interpolation method.

Next, data processor 104 sets the order quantity equal to the first order quantity determined in steps 304 - 308 (step 602). As explained above with respect to FIG. 3, the first order quantity is chosen as a starting point for iteratively searching the cost function to determine a reduced (e.g. minimum) cost. Returning to the muffler example above with a first order quantity of ten mufflers, in step 602, data processor 104 would set the order quantity as ten mufflers. Next, data processor 104 increases the order quantity by one increment (step 604). The increment used in step 604 may be the same increment defined in step 502. Returning again to the muffler example discussed above, the increment was defined as one muffler. When that is the case, data processor 104 would increase the order quantity to eleven mufflers (step 604).

Once the order quantity has been incremented, data processor 104 determines whether the order quantity is outside the predetermined range defined in step 302 (step 606). If the order quantity is outside the predetermined range, data processor 104 determines the optimum order quantity by decreasing the order quantity by one increment (step 616). Then, data processor 104 determines an optimum safety stock based on the optimum order quantity (step 618) using, for example, the manner described above with respect to step 506.

If the order quantity is not outside the predetermined range, data processor 104 determines a safety stock based on the order quantity (step 608). In step 608, the safety stock may be determined in the same manner as in step 506, i.e., using Equation 6. Once the safety stock is determined (step 608), data processor 104 determines a total cost for the safety stock and the order quantity (step 610). In step 610, the total cost may be determined as described with respect to step 508.

Once the total cost is determined, data processor 104 compares the total cost to a previous cost (steps 610-612). If the total cost is less than a previous cost, data processor 104 resets the previous cost to a value equal to the total cost (step 614), and the process returns to step 604, where the order quantity is increased by another increment. Steps 604-614 are repeated until data processor 104 determines in step 612 that the total cost is greater than the previous cost. This iterative process (steps 604-614) is used to find a reduced cost, such as a minimum cost. While, in one embodiment of the present invention, this reduced cost may be a minimum cost, in other embodiments it may be any cost less than a maximum total cost. Returning to step 612, if the total cost is greater than the previous cost, the series of steps 604-614 ends. Next, in step 616, data processor 104 determines the optimum order quantity by decreasing the current order quantity by one increment.

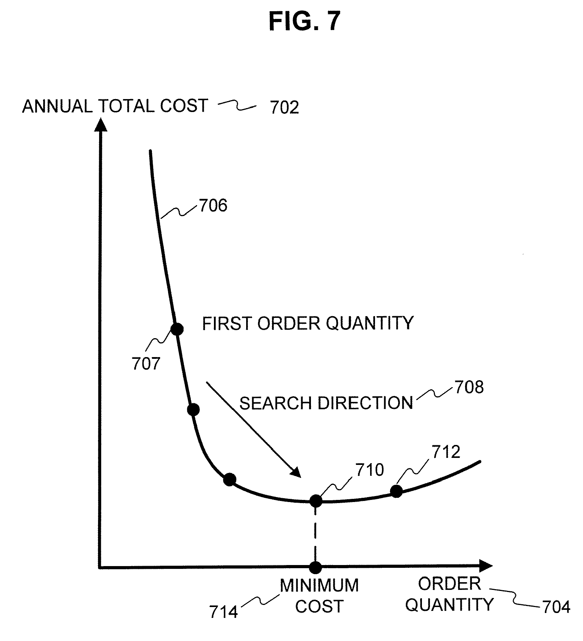

FIG. 7 is an exemplary plot of total cost as a function of order quantity, which illustrates a minimum total cost, in accordance with the method described in FIG. 6. Referring to FIG. 7, annual total cost 702 is plotted as a function of order quantity 704. The first point 707 on the cost curve 706 illustrates the first order quantity (used in step 602 to begin the iterative process). FIG. 7 also shows the search direction 708 as the direction of increasing order quantities 704. The plot illustrates that the annual total cost 702 decreases with each iteration, until it begins to increase at point 712. Thus, as illustrated in the plot, the minimum cost 710 is reached at the bottom of the cost curve just before the cost begins to increase. Referring again to FIG. 6, when the order quantity is reduced by one increment in step 616, it essentially serves to reduce the order quantity from point 712 to 710.

Once the optimum order quantity is determined, data processor 104 determines the quantity of safety stock based on the order quantity (steps 616-618), as described above with respect to step 506. These quantities may be optimum quantities since they reduce the total cost associated with a facility's inventory. By using predetermined increments for the order quantity, the steps of FIG. 6 find an optimum value for order quantity and safety stock that reduces cost. In another embodiment, traditional rounding steps for possible order quantities can be used as the increments. For example, the rounding steps can be based on package sizes for the products. Specifically, the rounding steps approach could be as follows: (1) use 1, 2 or 3 individual items of the products as the increments; (2) then use 1, 2, and 3 packages (each containing the item(s)) as increments; (3) next, use a pallet containing the items as the increment; and (4) repeat so forth (e.g., use a truck load, container, tanker, etc. as the increment). By using (1) - (4), the number of order quantities that have to be calculated to find the minimum warehousing costs for safety stock and order quantity can be decreased, which can significantly decrease the number of iterations. These packaging (also referred to as packing) rules are typically used in warehouses for the products (e.g., a product may be sold only in packs of 4, or from a special quantity on a pallet because it is cheaper to pack a pallet (with 100 packs) than 90 packs).

Returning to step 518, when the total cost is greater than the base cost as determined in steps 510 and 514, the optimum order quantity and safety stock are determined as illustrated in FIG. 8. Referring to FIG. 8, data processor 104 sets a previous cost as the base cost determined in step 500 (step 800). The previous cost is a variable used to iteratively search the cost function (Equation 4) so that the total cost of each decremented order quantity can be compared to the total cost of the previous order quantity (i.e. previous cost). Next, data processor 104 sets the order quantity as the first order quantity determined in steps 304-308 (step 802). As explained above with respect to FIG. 3, the first order quantity is chosen as a starting point for the iteratively searching the cost function (Equation 4) to determine a reduced (e.g. minimum) cost. Returning to the muffler example above with a first order quantity of ten mufflers, in step 802, data processor 104 would set the order quantity as ten mufflers. Next, data processor 104 decreases the order quantity by one increment (step 804). The increment used in step 804 may be the same increment defined in step 502. Returning again to the muffler example discussed above, the increment was defined as one muffler. When that is the case, data processor 104 would decrease the order quantity to nine mufflers (step 804).

Once the order quantity has been incremented, data processor 104 determines whether the order quantity is outside the predetermined range defined in step 302 (step 806). If the order quantity is outside the predetermined range, data processor 104 determines the optimum order quantity by increasing the order quantity by one increment (step 816). Then, data processor 104 determines an optimum safety stock based on the optimum order quantity (step 818), using, for example, the manner described with respect to step 506.

If the order quantity is not outside the predetermined range, data processor 104 determines a safety stock based on the order quantity (step 808). In step 808, the safety stock may be determined in the same manner as in step 506 (e.g., using Equation 6). Once the safety stock is determined (step 808), data processor 104 determines a total cost for the safety stock and the order quantity (step 810). In step 810, the total cost may be determined as described with respect to step 508.

Once the total cost is determined (step 810), data processor 104 compares the total cost to the previous cost (step 812). If the total cost is not greater than a previous cost, data processor 104 resets the previous cost to a value equal to the total cost (step 814). Thereafter, the process returns to step 804, where the order quantity is decreased by another increment. Steps 804-814 may be repeated until data processor 104 determines in step 812 that the total cost is greater than the previous cost. This iterative process (steps 804-814) is used to find a reduced cost, such as a minimum cost. While, in one embodiment of the present invention, this reduced cost may be a minimum cost, in other embodiments it may be any cost less than the maximum total cost. Returning to step 812, if the total cost is greater than the previous cost, the series of steps 804-814 ends. Next, in step 816, data processor 104 determines the optimum order quantity by increasing the current order quantity by one increment. Then, data processor 104 determines an optimum safety stock based on the optimum order quantity (step 818). As disclosed herein, this determination may be done consistent with, for example, the approach described with reference to step 506.

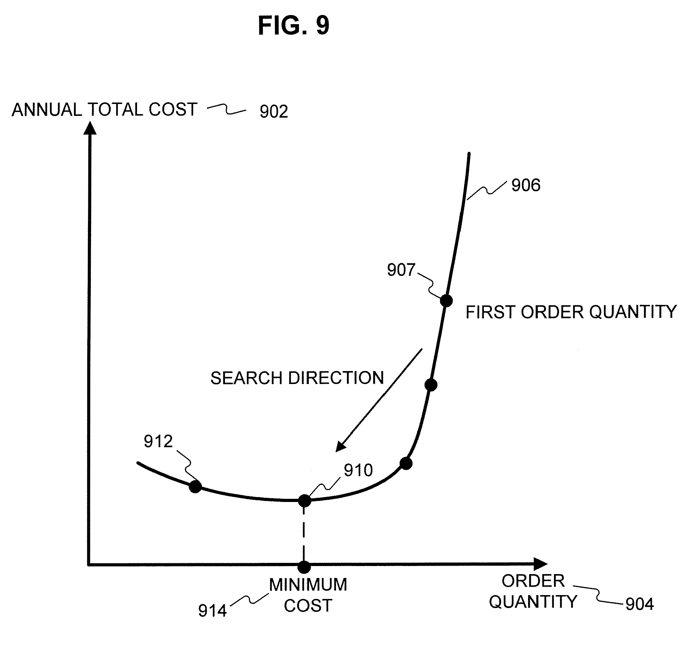

FIG. 9 shows exemplary plot of a first order quantity 906 as a function of annual total cost 902 and order quantity 904. The first point 907 on the cost curve 906 illustrates the first order quantity used in step 802 to begin the iterative process. FIG. 9 also shows a search direction 908 as the direction of decreasing order quantities 904. The plot illustrates that the annual total cost 902 decreases with each iteration, until it begins to increase at point 912. Thus, as illustrated in the plot, the minimum cost 910 is reached at the bottom of the cost curve just before the cost begins to increase. Returning again to FIG. 8, when the order quantity is increased by one increment in step 816, it essentially serves to increase the order quantity from point 912 to 910.

Although the systems and methods can be applied to a simple single supply chain or network, the systems and methods can also be applied to more complex supply networks containing a number of different facilities, such as a complex tree-like, hierarchical supply chain or network. Specifically, a bill of distribution (BOD) is essentially a location hierarchy that describes how goods are physically distributed within the supply chain. All facilities within a particular distribution network are included in one BOD, and a BOD can be assigned to one or more parts. The top node(s) of the BOD location hierarchy are called entry point(s). From the entry point, the BOD branches out into one or more child points, which represent different facilities within the distribution network. Within a distribution network, the process of forecasting demand is done using a bottom-up approach starting with the child facilities and moving up to the entry point. When performing inventory planning using the systems and methods described herein, however, the direction may be top-down. Inventory planning may begin with the entry point and then move down to each of the child points. For example, the demand period at the entry point can be determined before determining the order quantity and safety stock of a lower level of child points because sometimes the order quantity and safety stock determined at a higher level can be allocated (or pushed) to facilities on a lower level of the hierarchy.

The foregoing description of possible implementations consistent with the present invention does not represent a comprehensive list of all such implementations or all variations of the implementations described. The description of only some implementations should not be construed as an intent to exclude other implementations. One of ordinary skill in the art will understand how to implement the invention in the appended claims in may other ways, using equivalents and alternatives that do not depart from the scope of the following claims.

The systems and methods disclosed herein may be embodied in various forms including, for example, a data processor, such as a computer that also includes a database. Moreover, the above-noted features and other aspects and principles of the present invention may be implemented in various environments. Such environments and related applications may be specially constructed for performing the various processes and operations according to the invention or they may include a general-purpose computer or computing platform selectively activated or reconfigured by code to provide the necessary functionality. The processes disclosed herein are not inherently related to any particular computer or other apparatus, and may be implemented by a suitable combination of hardware, software, and/or firmware. For example, various general-purpose machines may be used with programs written in accordance with teachings of the invention, or it may be more convenient to construct a specialized apparatus or system to perform the required methods and techniques.

Systems and methods consistent with the present invention also include computer readable media that include program instruction or code for performing various computer-implemented operations based on the methods and processes of the invention. The media and program instructions may be those specially designed and constructed for the purposes of the invention, or they may be of the kind well known and available to those having skill in the computer software arts. Examples of program instructions include, for example, machine code, such as produced by a compiler, and files containing a high level code that can be executed by the computer using an interpreter.

**Claims**

1. A method for managing inventory comprising:

   • determining a first order quantity;
   • determining a search direction; and
   • determining a second order quantity and a safety stock based on the first order quantity and the search direction, such that the second order quantity and the safety stock reduce total cost.

2. The method of claim 1, wherein determining the first order quantity further comprises identifying an order quantity for which a first cost representative of a fixed ordering cost is equal to a second cost representative of a cost associated with an inventory.

3. The method of claim 2, wherein determining the first order quantity further comprises setting the first order quantity equal to a minimum order quantity within a range of order quantities when the first order quantity is not within the range.

4. The method of claim 3, further comprising using, as the range, a predetermined range.

5. The method of claim 1, wherein determining the search direction further comprises comparing a first cost to a second cost to determine which cost is greater; wherein the first cost corresponds to the first order quantity, and wherein the second cost corresponds to another order quantity different from the first order quantity.

6. The method of claim 5, further comprising determining the other order quantity by increasing the first order quantity by an increment value.

7. The method of claim 5, wherein determining the search direction further comprises defining the search direction based on whether the second cost is less than the first cost.

8. The method of claim 1, wherein determining the second order quantity further comprises determining the second order quantity, such that the reduced total cost is a minimum cost.

9. The method of claim 1, wherein determining the second order quantity further comprises determining the second order quantity by varying the first order quantity by an increment value until the total cost is reduced to a minimum.

10. The method of claim 9, further comprising determining the total cost based on a cost function.

11. The method of claim 10, further comprising defining the cost function based on at least one of the following: order quantity, safety stock, a predicted demand for a good, and a time period representative of the elapsed time between the time a good is ordered and the time the good is available as inventory.

12. A system for managing inventory, the system comprising:

   • a processor; and
   • a memory,

   wherein the processor and the memory are configured to perform a method comprising:

   • determining a first order quantity;
   • determining a search direction; and
   • determining a second order quantity and a safety stock based on the first order quantity and the search direction, such that the second order quantity and the safety stock reduce total cost.

**13.** The system of claim 12, wherein determining the first order quantity further comprises identifying an order quantity for which a first cost representative of a fixed ordering cost is equal to a second cost representative of a cost associated with an inventory.

**14.** The system of claim 13, wherein determining the first order quantity further comprises setting the first order quantity equal to a minimum order quantity within a range of order quantities when the first order quantity is not within the range.

**15.** The system of claim 14, wherein the range is a predetermined range.

**16.** The system of claim 12, wherein determining the search direction comprises comparing a first cost to a second cost to determine which cost is greater; wherein the first cost corresponds to the first order quantity, and wherein the second cost corresponds to another order quantity different from the first order quantity.

**17.** The system of claim 16, further comprising determining the other order quantity by increasing the first order quantity by an increment value.

**18.** The system of claim 16, wherein determining the search direction further comprises defining the search direction based on whether the second cost is less than the first cost.

**19.** The system of claim 12, wherein the reduced total cost is a minimum cost.

**20.** The system of claim 12, wherein determining the second order quantity further comprises determining the second order quantity by varying the first order quantity by an increment value until the total cost is reduced to a minimum.

**21.** The system of claim 20, further comprising determining the total cost based on a cost function.

**22.** The system of claim 21, further comprising defining the cost function based on at least one of the following: order quantity, safety stock, a predicted demand for a good, and a time period representative of the elapsed time between the time a good is ordered and the time the good is available as inventory.

**23.** A system for managing stock inventory levels comprising:

• means for determining a first order quantity;
• means for determining a search direction; and
• means for determining a second order quantity and a safety stock based on the first order quantity and the search direction, such that the second order quantity and the safety stock reduce total cost.

**24.** A computer-readable medium containing instructions to configure a data processor to perform a method for managing inventory, the method comprising:

• determining a first order quantity;
• determining a search direction; and
• determining a second order quantity and a safety stock based on the first order quantity and the search direction, such that the second order quantity and the safety stock reduce total cost.

**25.** The computer-readable medium of claim 24, wherein determining the first order quantity further comprises identifying an order quantity for which a first cost representative of a fixed ordering cost is equal to a second cost representative of a cost associated with an inventory.

**26.** The computer-readable medium of claim 25, wherein determining the first order quantity further comprises setting the first order quantity equal to a minimum order quantity within a range of order quantities when the first order quantity is not within the range.

**27.** The computer-readable medium of claim 26, wherein the range is a predetermined range.

**28.** The computer-readable medium of claim 24, wherein determining the search direction comprises comparing a first cost to a second cost to determine which cost is greater; wherein the first cost corresponds to the first order quantity, and wherein the second cost corresponds to another order quantity different from the first order quantity.

**29.** The computer-readable medium of claim 28, further comprising determining the other order quantity by increasing the first order quantity by an increment value.

**30.** The computer-readable medium of claim 28, wherein determining the search direction further comprises defining the search direction based on whether the second cost is less than the first cost.

**31.** The method of claim 24, wherein the reduced total cost is a minimum cost.

**32.** The computer-readable medium of claim 24, wherein determining the second order quantity further comprises determining the second order quantity by varying the first order quantity by an increment value until the total cost is reduced to a minimum.

**33.** The computer-readable medium of claim 32, further comprising determining the total cost based on a cost function.

**34.** The computer-readable medium of claim 33, further comprising defining the cost function based on at least one of the following: order quantity, safety stock, a predicted demand for a good, and a time period representative of the elapsed time between the time a good is ordered and the time the good is available as inventory.

**FIG. 1**

# FIG. 2

START

DETERMINE A FIRST
ORDER QUANITTY — 202

DETERMINE A SEARCH
DIRECTION — 204

DETERMINE AN
OPTIMUM ORDER
QUANTITY AND SAFETY
STOCK — 206

END

# FIG. 3

START

DEFINE A RANGE FOR ORDER QUANTITY ⟋ 302

SET THE FIRST ORDER QUANTITY AS THE ECONOMIC ORDER QUANTITY (EOQ) ⟋ 304

⟋ 306

IS THE FIRST ORDER QUANTITY OUTSIDE THE RANGE?

YES

NO

SET THE FIRST ORDER QUANTITY AS THE MINIMUM ORDER QUANTITY WITHIN THE DEFINED RANGE

308

END

# FIG. 4

402 ～⌒ COST

ORDER COST

406

408

INVENTORY CARRYING COST

410

EOQ

ORDER
QUANTITY ⌒— 404

EP 1 647 926 A1

# FIG. 5

START

DETERMINE A BASE COST BASED ON THE FIRST ORDER QUANTITY — 500

DEFINE A QUANTITY INCREMENT — 502

INCREASE THE FIRST ORDER QUANTITY BY ONE INCREMENT — 504

DETERMINE A SAFETY STOCK (SS) CORRESPONDING TO THE INCREASED ORDER QUANTITY — 506

DETERMINE A TOTAL COST FOR THE SAFETY STOCK AND INCREASED ORDER QUANTITY — 508

IS THE TOTAL COST GREATER THAN THE BASE COST? — 510

NO

YES

DEFINE A FIRST SEARCH DIRECTION (e.g. SUCCESSIVELY INGREASING ORDER QUANTITIES) — 512

DEFINE A SECOND SEARCH DIRECTION (e.g. SUCCESSIVELY DECREASING ORDER QUANTITIES) — 514

FIG. 6 — 516

518 — FIG. 8

# FIG. 6

START

SET PREVIOUS COST AS THE BASE COST ⟿ 600

SET THE ORDER QUANTITY AS THE FIRST ORDER QUANTITY ⟿ 602

INCREASE ORDER QUANTITY BY ONE INCREMENT ⟿ 604

606

IS THE ORDER QUANTITY OUTSIDE THE RANGE?

NO — YES

DETERMINE A SAFETY STOCK BASED ON THE ORDER QUANTITY ⟿ 608

DETERMINE A TOTAL COST FOR THE SAFETY STOCK AND THE ORDER QUANTITY ⟿ 610

612

IS THE TOTAL COST GREATER THAN THE PREVIOUS COST?

NO — YES

SET THE PREVIOUS COST AS THE TOTAL COST ⟿ 614

DETERMINE OPTIMUM ORDER QUANTITY AS ORDER QUANTITY MINUS ONE INCREMENT ⟿ 616

DETERMINE OPTIMUM SAFETY STOCK BASED ON OPTIMAL ORDER QUANTITY ⟿ 618

END

# FIG. 7

ANNUAL TOTAL COST ~ 702

706

FIRST ORDER QUANTITY

707

SEARCH DIRECTION ~ 708

710  712

MINIMUM COST

714

ORDER QUANTITY ~ 704

EP 1 647 926 A1

# FIG. 8

START

SET PREVIOUS COST AS THE BASE COST ⟿ 800

SET THE ORDER QUANTITY AS THE FIRST ORDER QUANTITY ⟿ 802

DECREASE ORDER QUANTITY BY ONE INCREMENT ⟿ 804

806
IS THE ORDER QUANTITY OUTSIDE THE RANGE?

NO

YES

DETERMINE A SAFETY STOCK BASED ON THE ORDER QUANTITY ⟿ 808

DETERMINE A TOTAL COST FOR THE SAFETY STOCK AND THE ORDER QUANTITY ⟿ 810

816
DETERMINE OPTIMUM ORDER QUANTITY AS ORDER QUANTITY PLUS ONE INCREMENT

818
DETERMINE OPTIMUM SAFETY STOCK BASED ON THE OPTIMAL ORDER QUANTITY

812
IS THE TOTAL COST GREATER THAN THE PREVIOUS COST?

YES

NO

814
SET THE PREVIOUS COST AS THE TOTAL COST

END

EP 1 647 926 A1

## FIG. 9

ANNUAL TOTAL COST ⌇ 902

906

907

FIRST ORDER QUANTITY

SEARCH DIRECTION

912

910

914 ⌇ MINIMUM COST

ORDER QUANTITY ⌇ 904

**European Patent**
**Office**

**DECLARATION**

Application Number

which under Rule 45 of the European Patent Convention EP 04 10 5096
shall be considered, for the purposes of subsequent
proceedings, as the European search report

| The Search Division considers that the present application, does not comply with the provisions of the EPC to such an extent that it is not possible to carry out a meaningful search into the state of the art on the basis of all claims | CLASSIFICATION OF THE APPLICATION (Int.Cl.7) |
|---|---|
| Reason: | G06F17/60 |

The claims of the application are
formulated to merely specify commonplace
features relating to matter excluded from
patentability under Art. 52(2) and (3) EPC
and its technological implementation. Due
to the attendant lack of resolution of
technical definition present, the search
division could not establish a technical
problem addressed in order to be able to
carry out a meaningful search into the
state of the art (Rule 45 EPC). See also
Guidelines Part B Chapter VIII.
Accordingly no search has been carried
out.

The applicant's attention is drawn to the
fact that a search may be carried out
during examination following a declaration
of no search under Rule 45 EPC, should the
problems which led to the declaration
being issued be overcome (see EPC
Guideline C-VI, 8.5).
-----

| Place of search | Date | Examiner |
|---|---|---|
| The Hague | 21 February 2005 | Cîrstet, A |

EPO FORM 1504 (P04C37)